# EUROPEAN PATENT APPLICATION

(11) **EP 2 884 756 A2**
(43) Date of publication of application: **17.06.2015**
(21) Application number: 14175575.1
(22) Date of filing: 03.07.2014
(51) Int. Cl.: H04N 21/258

(54) **A server, display apparatus, system for controlling image in a plurality of display apparatuses, and controlling method thereof**

(30) Priority: 12.12.2013 KR 20130154912
(71) Applicant: Samsung Electronics Co., Ltd, Gyeonggi-do 443-742 (KR)
(72) Inventor: Lee, Jae-hwang, Seoul (KR); Hong, Jin-hyuck, Incheon (KR); Kim, Sung-gi, Gyeonggi-do (KR)
(74) Representative: Appleyard Lees

(57) **Abstract**

A system for controlling a plurality of display apparatuses which are connected to a server, a controlling method thereof, a server, and a display apparatus are provided. The method for controlling a plurality of display apparatuses includes registering the plurality of display apparatuses by using authentication information, generating playing information and image data based on the authentication information, and transmitting, to the plurality of display apparatuses, the playing information and the image data.

## Description

### BACKGROUND

### 1. Field

Apparatuses and methods consistent with exemplary embodiments relate to a server, a display apparatus, a system for controlling an image in a plurality of display apparatuses, and a controlling method thereof, and more particularly, to a server which easily controls an image which is being played in a plurality of display apparatuses, a system for controlling an image in a plurality of display apparatuses, and a method for controlling such a system.

### 2. Description of the Related Art

When displaying a plurality of display apparatuses in an electronic equipment store or displaying an image on an outer wall of a building or at various places such as an event hall, an image may be displayed simultaneously in a plurality of display apparatuses for aesthetic or advertising purposes.

To display an image in a plurality of display apparatuses simultaneously, a user must connect an external storage medium (such as, for example, a universal serial bus (USB)) which stores an image, or connect a plurality of display apparatuses with each external storage medium, and then download the image from the external storage medium.

Alternatively, a user may be required to execute a separate input mode (such as, for example, via an external input) of a display apparatus, and then display an image which is transmitted from another electronic apparatus via a connected cable, or the like. In this case, it is not easy to return an input mode of a display apparatus to a general mode (such as, for example, a broadcasting signal output mode), and thus a user may feel that a manipulation to convert a general mode into a separate input mode of a display apparatus is inconvenient.

Accordingly, there is a necessity to simultaneously play an image in plurality of display apparatuses without separately inputting the image to each of the plurality of display apparatuses and/or without executing a separate input mode.

### SUMMARY

According to the present invention there is provided an apparatus and method as set forth in the appended claims. Other features of the invention will be apparent from the dependent claims, and the description which follows.

One or more exemplary embodiments provide a server which enables a user to easily control an image which is simultaneously being played in a plurality of display apparatuses, a display apparatus, a system for controlling an image in a plurality of display apparatuses, and a method for controlling such a system.

According to an aspect of an exemplary embodiment, there is provided a method for controlling, by a server, a plurality of display apparatuses, the method including registering the plurality of display apparatuses by using authentication information, generating playing information and image data based on the authentication information, and transmitting, to the plurality of display apparatuses, the playing information and the image data.

The authentication information may include at least one from among a location where the plurality of display apparatuses are positioned, an area, a feature, and a type of the plurality of display apparatuses.

The playing information may include at least one from among a type of the image data, information which relates to a playing time, and information which relates to a playing period.

In response to a playing of the image data being stopped in at least one display apparatus from among the plurality of display apparatuses, the at least one display apparatus may be configured to determine a stoppage interval which relates to the image data, and in response to a restarting of the playing of the image data, the at least one display apparatus may be further configured to play the image data in accordance with the determined stoppage interval.

The method may further include receiving, from at least one display apparatus from among the plurality of display apparatuses, a query regarding a playing timing of the image data, and when a response to the query is received by the at least one display apparatus, the at least one display apparatus may be configured to play the image data based on the received response to the query.

The receiving the query may include receiving the query regarding the playing timing in a preset time interval.

The image data may include a public relations image which is related to the plurality of display apparatuses.

The plurality of display apparatuses may be configured to receive the image data and to play the received image data in accordance with a preset time and a preset order.

According to an exemplary embodiment, an image control system may include a plurality of display apparatuses configured to register the plurality of display apparatuses to a server by using authentication information, to receive playing information and image data from the server, and to play the image data based on the playing information; and the server configured to generate the playing information and the image data based on the authentication information and to transmit, to the plurality of display apparatuses, the playing information and the image data.

The authentication information may include at least one from among a location where the plurality of display apparatuses are positioned, an area, a feature, and a type of the plurality of display apparatuses.

The playing information may include at least one from among a type of the image data, information which relates to a playing time, and information which relates to a playing period.

In response to a playing of the image data being stopped in at least one display apparatus from among the plurality of display apparatuses, the at least one display apparatus may be further configured to determine a stoppage interval which relates to the image data, and in response to a restarting of the playing of the image data, the at least one display apparatus may be further configured to play the image data in accordance with the determined stoppage interval.

At least one display apparatus from among the plurality of display apparatuses may be further configured to transmit, to the server, a query regarding a playing timing of the image data, and when a response to the query is received by the at least one display apparatus, the at least one display apparatus may be further configured to play the image data based on the received response to the query.

The at least one display apparatus may be further configured to transmit the query regarding the playing timing in a preset time interval.

The image data may include a public relations image which is related to the plurality of display apparatuses.

The plurality of display apparatuses may be further configured to play the image data in accordance with a preset time and a preset order.

According to an exemplary embodiment, a server may include a communicator configured to receive authentication information from a plurality of display apparatuses; and a controller configured to control the communicator to register the plurality of display apparatuses by using the authentication information, to generate playing information and image data which is usable by at least one display apparatus from among the plurality of display apparatuses for synchronizing and playing an image, and to transmit, to the plurality of display apparatuses, the generated playing information and the generated image data.

According to an exemplary embodiment, a display apparatus may include a communicator configured to transmit, to a server, authentication information, and to receive, from the server, playing information and image data; a display configured to play the received image data; and a controller configured to transmit the authentication information to the server, to register the display apparatus to the server, to synchronize the image data received from the server with image data which is received by another display apparatus, and to control the display to play the synchronized image data.

According to the various exemplary embodiments, a user may easily control an image which is simultaneously played in a plurality of display apparatuses.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a view which illustrates a system for controlling an image in a plurality of display apparatuses, according to an exemplary embodiment;
FIG. 2 is a block diagram which illustrates a configuration of a server, according to an exemplary embodiment;
FIG. 3 is a block diagram which illustrates a configuration of a display apparatus, according to an exemplary embodiment;
FIG. 4 and FIG. 5 are views which illustrate a method for synchronizing an image which is being played in a plurality of display apparatuses, according to various exemplary embodiments;
FIG. 6 is a flow chart which illustrates a method for controlling a plurality of display apparatuses, according to an exemplary embodiment;
FIG. 7 is a sequence diagram which illustrates a method for controlling a display apparatus, according to another exemplary embodiment; and
FIG. 8 is a view which illustrates a system for controlling an image in a plurality of display apparatuses, according to an exemplary embodiment.

### DETAILED DESCRIPTION

Certain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments may be practiced without those specifically defined matters. Also, well-known functions or constructions are not described in detail because they would obscure the present disclosure with unnecessary detail.

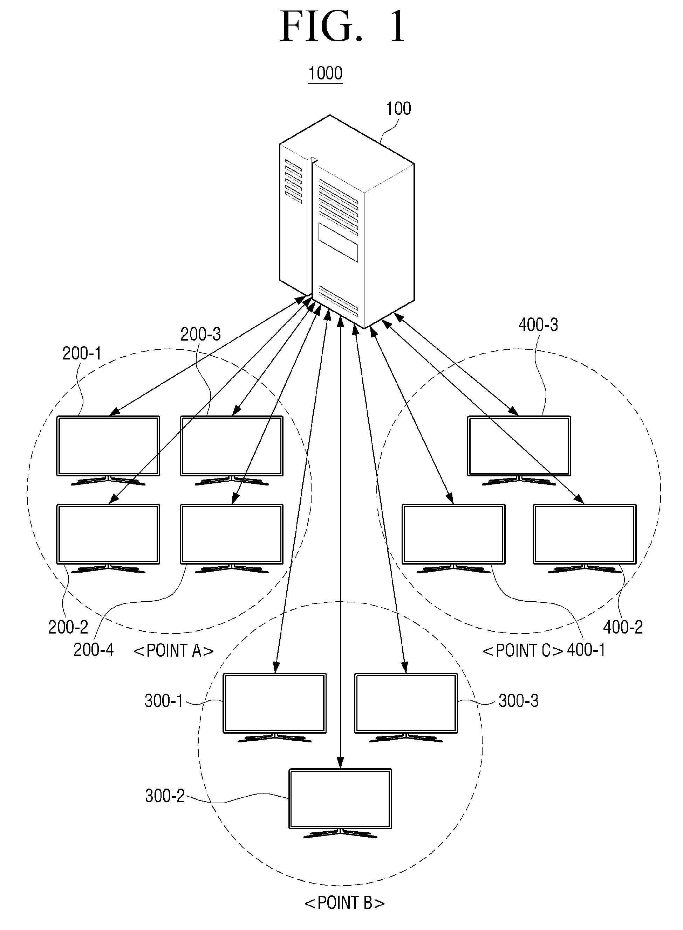

FIG. 1 is a view which illustrates a system 1000 for controlling an image in a plurality of display apparatuses, according to an exemplary embodiment. As illustrated in FIG. 1, the system 1000 for controlling an image may include a server 100 and a plurality of display apparatuses.

For example, in a case of a system for controlling an image in a plurality of display apparatuses which are respectively situated at a plurality of electronic equipment stores, a server 100 may communicate with the plurality of display apparatuses of each respective electronic equipment store.

In particular, as illustrated in FIG. 1, the server 100 may communicate with each of a plurality of display apparatuses 200-1, 200-2, 200-3, 200-4 which are positioned at point A, with each of a plurality of display apparatuses 300-1, 300-2, 300-3 which are positioned at point B, and with each of a plurality of display apparatuses 400-1, 400-2, 400-3 which are positioned at point C.

However, this is merely exemplary, and the server 100 may communicate with only one display apparatus at each of points A, B, and C. In particular, the server 100 may transmit various data by registering one display apparatus at each point, and the one display apparatus which receives the various data may forward the received data to each of the other display apparatuses which are situated at the same respective point.

In an exemplary embodiment, the server 100 may register a display apparatus. In particular, the server 100 may transmit, to the display apparatus, authentication information, receive authentication information again, and register the display apparatus. Further, the server 100 may generate playing information and image data based on the authentication information, and may transmit, to the display apparatus, the generated playing information and the generated image data.

Further, the display apparatus may transmit authentication information which includes a location where a plurality of display apparatuses are positioned, an area, a feature, and a type of the plurality of display apparatuses, and the display apparatus may register the information to the server 100. The display apparatus may receive playing information and image data which is generated by the server 100 based on the authentication information. The display apparatus may play the image data based on the received playing information.

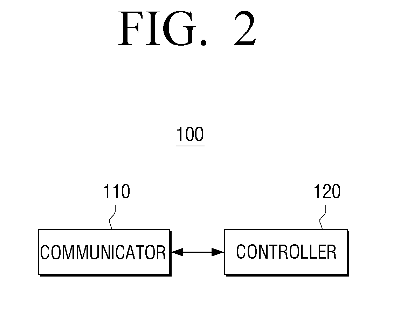

In particular, as illustrated in FIG. 2, the server 100 includes a communicator 110 and a controller 120.

A communicator 110 is an element which is configured to communicate with the plurality of display apparatuses and with an external electronic apparatus. In particular, the communicator 110 may transmit authentication information to the plurality of display apparatuses and/or receive authentication information from the plurality of display apparatuses.

A controller 120 is an element which is configured to control overall operations of the server 100. In particular, the controller 120 may control the communicator 110 to register the plurality of display apparatuses by using authentication information, generate playing information and image data so that at least one display apparatus, such as, for example, a display apparatus which is positioned in a specific area with respect to the plurality of display apparatuses, may synchronize and play an image, and transmit, to the plurality of display apparatuses, the playing information and the image data.

More particularly, the server 100 may receive authentication information from the display apparatuses of each point via the communicator 110, and register each display apparatus to the server 100.

For example, referring again to FIG. 1, the controller 120 may transmit, to a display apparatus 200-1 which is situated at point A, a serial number which serves as temporary authentication information that can authenticate the display apparatus 200-1 of point A. Further, the communicator 110 may transmit the generated serial number to the display apparatus 200-1 of point A.

In the authentication information, at least one of a location where a plurality of display apparatuses are positioned, an area, a feature, and a type of the plurality of display apparatuses may be included. For example, information which relates to point A (such as, for example, Seocho-dong, Seocho-gu, Korea) and the number of display apparatuses which are situated at point A (for example, 40 apparatuses) may be included in the authentication information. The server 100 may receive a serial number which functions as the authentication information and which is transmitted by the display apparatus 200-1 within point A to the server 100, and then use the received serial number to register the display apparatus 200-1.

When a plurality of display apparatuses which are positioned at each point are registered in the server 100, the controller 120 of the server 100 may generate playing information and image data based on the authentication information.

In particular, in the authentication information, a location where the plurality of display apparatuses are positioned, an area, a feature, and a type of the plurality of display apparatuses are included, and thus, the controller 120 of the server 100 may generate playing information and image data which are tailored to the location where the display apparatus is positioned and/or playing information and image data which are tailored to a feature of the display apparatus.

For example, when point A of FIG. 1 is an electronic equipment store which is located in Seocho-dong, Seocho-gu of Korea and when point B is an electronic equipment store which is located in Sydney, Australia, weather and main products of each area are different, and thus, the server 100 may generate respective playing information and image data which are suitable for a corresponding feature of each point, and transmit the respective playing information and image data to a respective display apparatus of each point. That is, the server 100 may generate and transmit to point A an image of a snow boarder, and generate and transmit to point B an image of scenery of a sea shore.

Playing information may include information which relates to at least one from among a type of image data, a playing time, and a playing period. For example, in case of playing information, image data may include an image A, an image B, and an image C. The image A may be an image which illustrates scenery of the sea for which a playing is scheduled to start at 10 a.m. and to end at 12 noon, the image B may be an image of a manufacturer to advertise a display apparatus for which a playing is scheduled to start at 12 noon and to end at 4 p.m., and the image C may be an image which illustrates selected scenes for which a playing is scheduled to start at 4 p.m. and to end at 9 p.m. The images A, B, and C may include information which is intended be played from June to September.

In particular, playing information may include an organization table which includes a playing time for each image. In this aspect, an organization table includes information which relates to which image is played at what time.

Further, image data may include any or all types of an image which may be displayed in a display apparatus. For example, the image may be an image which is made by a manufacturer of the display apparatus or an image in which a logo of a manufacturer is animated.

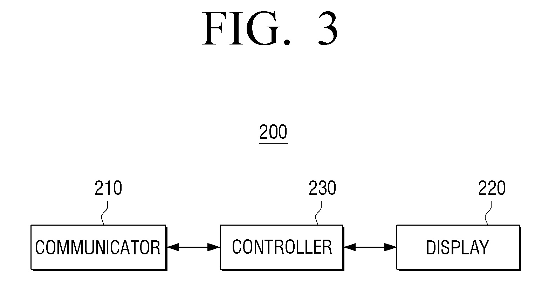

Each of a plurality of display apparatuses which are situated at each point plays received image data based on playing information received from the server 100. In particular, the display apparatus 200, as illustrated in FIG. 3, may include a communicator 210, a display 220, and a controller 230.

The communicator 210 is an element which is configured to communicate with the server 100 and/or with another display apparatus. In particular, the communicator 210 may receive the above-described authentication information from the server 100 and/or transmit the authentication information to the server 100. Further, the communicator 210 may receive playing information and/or image data which is generated by the server 100.

The display 120 is an element which is configured to display various contents which may include an image. The display 120 may play an image based on information which is provided in the organization table included in playing information received from the server 100.

In particular, when there are a plurality of display apparatuses situated at a point, each display apparatus 200 generates an image based on information which is provided in the organization table included in playing information received from the server 100, and thus, a synchronization of the playing of images in all of the display apparatuses may be performed. Further, when areas within a point are divided, a plurality of display apparatuses included in each area may play the same image.

The controller 230 is an element which is configured to control the overall operations of the display apparatus 100. In particular, the controller 230 registers the display apparatus 200 into the server 100 by using authentication information. In addition, via the communicator 210, the controller controls to receive image data from the server 100, to synchronize the data with other display apparatuses, and to play the data via the display 220.

In an exemplary embodiment, when a playing of image data is stopped in at least one display apparatus, the controller 230 may determine a stoppage interval which relates to the image data. In particular, when a playing of an image data is stopped, the controller 230 of the display apparatus 200 may determine a length of time which relates to the stoppage, and when a restarting of the playing of image data occurs, the image data may be played according to the determined stoppage interval.

For example, when a plurality of display apparatuses play an image data of a section from 00' 00" to 11' 25", and a playing of image data of one display apparatus from among a plurality of display apparatuses is stopped, the controller 230 counts playing time in the same manner as a case where the image data is played, even though it has not been played. Accordingly, when the determined stoppage interval is 3 minutes, and the playing of the image data restarts, the controller 230 controls to play the image data from the section which corresponds to 14' 25".

Further, the controller 230 may control to transmit, to the server 100, a query which relates to a playing timing of the image data being played, receive information which relates to playing timing from the server 100, and play the image data based on the received response to the query.

In particular, the controller 230, according to a random interval or a preset interval, may transmit a query to the server 100 regarding a playing timing which relates to image data being played via the display 220. Further, the controller 230, when information which relates to the playing timing of an image is received from the server 100, may control to play an image data based on the received response to the query.

For example, the display apparatus 200 may play an image data until 11' 25", execute another application based on a received user input, and stop a playing of the image data. When a certain period time is elapsed after the image data is stopped, and the playing of the image data is resumed, a frame of the image data which is currently displayed may be different from a frame of the image data which is currently displayed on other display apparatuses. In this case, the controller 230 of the display apparatus 200 may transmit a query to the server 100 which relates to a playing timing of the image data which is being played. If information which indicates that the playing timing is 14' 25" is received from the server 100, the controller 230 may control the display 220 to play an image data from 14' 25".

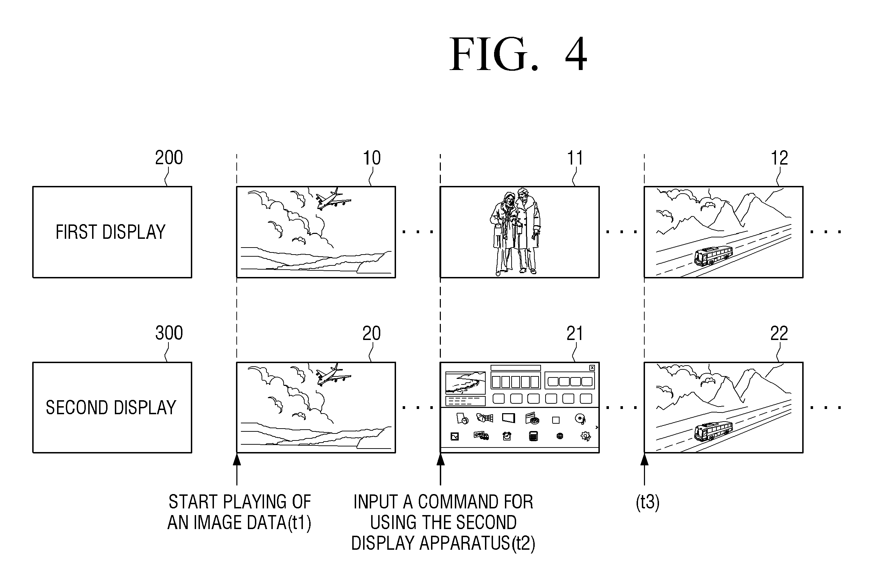

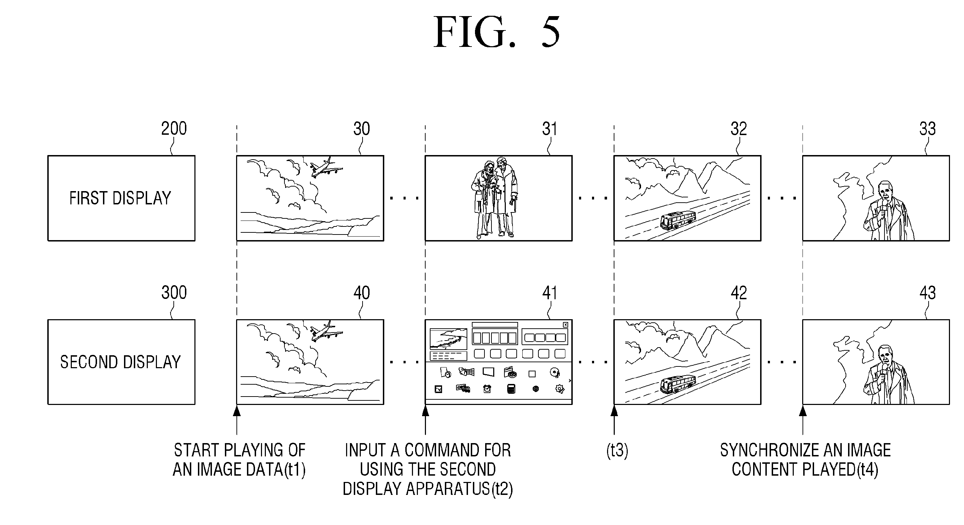

A method for synchronizing image data will be described below with reference to FIGS. 4 and 5.

As illustrated in FIG. 4, when the same image data is displayed in the first display apparatus 200 and the second display apparatus 300, the image data is displayed as indicated in the organization table received from the server 100, and thus, each display apparatus may display the same image data at the time (i.e., time t1) when a playing of an image data starts, without a separate manipulation. In particular, the first display apparatus 200 and the second display apparatus 300 may respectively display the first image 10 and 20 at time t1.

At time t2, which is a time when a certain time has elapsed with respect to time t1, when a command for using an apparatus (such as, for example, a command relating to an execution of a certain application) is input to the second display apparatus 300, the first display apparatus 200 may continue to display image data, whereas the second display apparatus 300 may display another content 21 in accordance with the command.

The second display apparatus 200 may measure an amount of time during which another content 21 is displayed, or during which another application is executed. For example, when t3-t2 is measured, and when a playing of image data in the second display apparatus 200 resumes, the second display apparatus 200 may play the image data starting from a section which corresponds to time t3.

Alternatively, as illustrated in FIG. 5, with reference to the second display apparatus 300 in which an image content playing was stopped, when a playing of the image content resumes, the image playing may resume from the stopped section. In this aspect, the second display apparatus may transmit a query which relates to a playing timing to the server 100, and may synchronize the playing of the image content with another display apparatus based on a received response to the query.

In particular, as illustrated in FIG. 4, when the same image data is displayed in the first display apparatus 200 and the second display apparatus 300, the image data is displayed as indicated in the organization table received from the server 100, and thus, each display apparatus may display the same image data at the image data playing resuming time (i.e., time t1), without a separate manipulation. More particularly, in both of the first display apparatus 200 and the second display apparatus 300, the first image 30, 40 may be displayed at time t1.

At time t2, which is a time when a certain time has elapsed with respect to time t1, when a command which relates to using an apparatus (for example, a command which relates to an execution of a certain application) is input to the second display apparatus 300, the first display apparatus 200 may continue to display the second image 31 section of an image data, whereas the second display apparatus 300 may display another content 41 in response to the command.

When the second display apparatus 300 resumes the playing of the image data, the second display apparatus 300 may display the second image 42 section where the playing of the image data is stopped. In particular, the first display apparatus 200 may display the third image 33 section, and the second display apparatus 300 displays the second image 42 section, and thus, a synchronization of the image data being displayed in the display apparatus may be failed. Accordingly, for synchronization of image data, the second display apparatus 300 may transmit a query to the server 100 regarding a playing timing of another display apparatus (that is, the first display apparatus 200).

In this aspect, when the second display apparatus 300 receives the information from the server 100 that a playing timing of the image data being played in the first display apparatus 200 corresponds to the fourth image 33 (i.e., at time t4), the fourth image 33 (t4) may be displayed. Accordingly, from time t4 where the fourth image 33, 43 section is played, the first display apparatus 200 and the second display apparatus 300 may synchronize with each other and play the image content based on the synchronization.

By the aforementioned image control system of the plurality of display apparatuses including a server and the plurality of display apparatuses, the registered plurality of display apparatuses may easily synchronize and play an image content according to a fixed time.

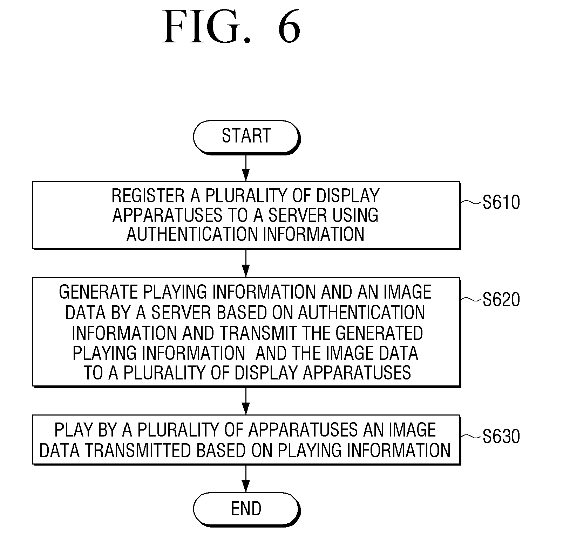

FIG. 6 is a flowchart which illustrates a method for controlling a plurality of display apparatuses, according to an exemplary embodiment.

First, in operation S610, using authentication information, a plurality of display apparatuses are registered to a server. In particular, the server 100 may receive authentication information from the display apparatus 200, and then the server 100 may use the received authentication information in order to register the display apparatus 200.

In the authentication information, at least one of a location where a plurality of display apparatuses are positioned, an area, a feature, and a type of the plurality of display apparatuses may be included. For example, information which relates to point A (such as, for example, Seocho-dong, Seocho-gu, Korea) and the number of display apparatuses which are situated at point A (for example, 40 apparatuses) may be included. The server 100 may receive a serial number which serves as the authentication information and which is transmitted by the display apparatus 200 within point A to the server 100, and the server 100 may then use the received serial number to register the display apparatus 200.

In operation S620, a server generates playing information and image data based on the authentication information, and transmits the generated playing information and image data to a plurality of display apparatuses.

In particular, in the authentication information, a location where the plurality of display apparatuses are positioned, an area, and a feature and a type of the plurality of display apparatuses are included, and thus, the server 100 may generate playing information and image data which are tailored to the location where the display apparatus is positioned, or to a feature of the display apparatus. Further, the server 100 may transmit, to the display apparatus, the generated playing information and the image data.

Playing information may include at least one of information which relates to a type of an image data, information which relates to a playing time, and information which relates to a playing period. For example, in case of playing information, image data may include an image A, an image B, and an image C. The image A may be an image which illustrates scenery of the sea for which a playing is scheduled to start at 10 a.m. and to end at 12 noon, the image B may be an image of a manufacturer to advertise a display apparatus which is scheduled to start at 12 noon and to end at 4 p.m., and the image C may be an image which illustrates selected scenes and which is scheduled to start at 4 p.m. and to at 9 p.m. The images A, B, and C may include information which is intended to be played from June to September.

In particular, playing information may include an organization table which includes information which relates to a playing time for each image. In this aspect, an organization table includes information which indicates which image is to be played at what time.

Further, image data includes all types of an image which may be displayed in a display apparatus. For example, the image may be an image which is made by a manufacturer of the display apparatus, or an image in which a logo of a manufacturer is animated.

In operation S630, a plurality of display apparatuses play image data which has been transmitted based on the playing information. For example, when there are a plurality of display apparatuses which are situated at a point, each display apparatus 200 generates an image based on information provided in the organization table which is included in the playing information received from the server 100, and thus, a synchronization of the images which are played in all the display apparatuses may be performed. Further, when areas within a point are separated, a plurality of display apparatuses included in each separate area may play the same image.

However, the display apparatus may synchronize image content with another display apparatus. Further synchronization of content was described above, and thus will not be further described.

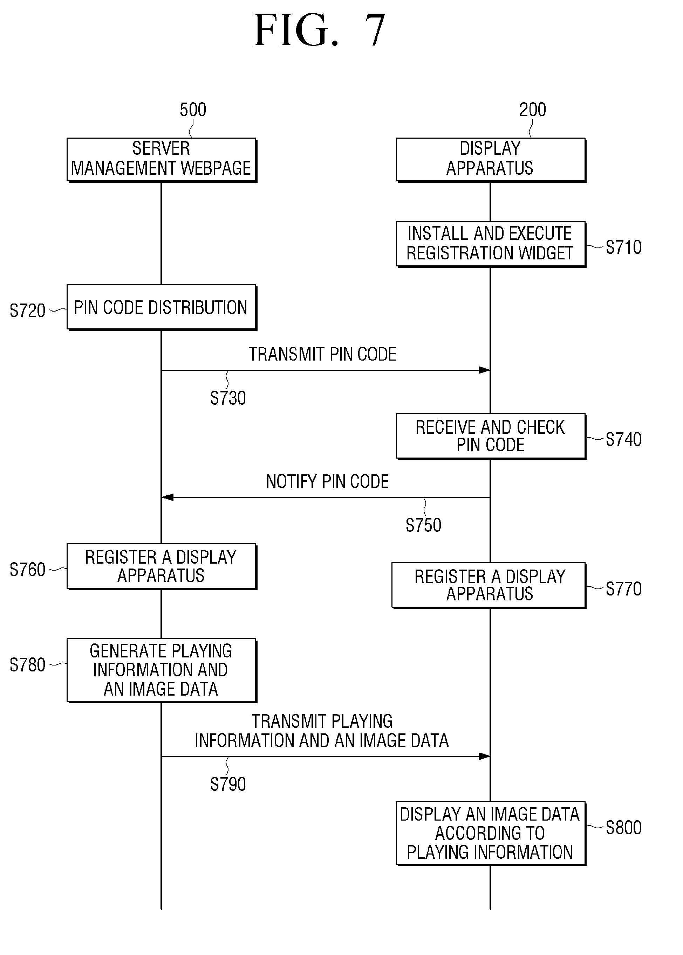

FIG. 7 is a sequence diagram which illustrates a method for controlling a display apparatus, according to still another exemplary embodiment.

The server 100, as described above, may register a plurality of display apparatuses using authentication information. In this case, via a server management webpage 500 which manages the server 100, registration of the server 100 and the plurality of display apparatuses 200, and/or transmission of image data may be controlled.

In particular, in operation S710, the display apparatus 200 installs and executes the registration widget. For example, the registration widget may include content which may execute a user setting mode or a shop management mode of the display apparatus 200.

After executing the registration widget, when a user command for registration to the server 100 is input, in operation S720, the server management webpage 500 distributes a personal identification number (PIN) code. In particular, the PIN code may be a type of authentication information which includes at least one of a location where a plurality of display apparatuses are positioned, an area, a feature, and a type of the plurality of display apparatuses. In operation S730, the server management webpage 500 transmits the PIN code to the display apparatus 200.

In operation S740, the display apparatus 200 receives and identifies the PIN code, and in operation S750, the display apparatus 200 notifies the PIN code to the server management webpage 500. When it is identified in the server management webpage 500 that the PIN code has been already notified, the display apparatus 200 is registered in operations S760 and S770. In particular, the server management webpage 500 may register the display apparatus 200 by using information which is included in the PIN code, such as a location where a plurality of display apparatuses are positioned, an area, a feature, and a type of the plurality of display apparatuses.

In operation S780, the server management webpage 500 generates playing information and image data, and in operation S790, the server management webpage 500 transmits the generated playing information and the image data to the display apparatus 200. In particular, the server 100 may generate playing information and image data based on authentication information which relates to the display apparatus 200. Accordingly, the server management webpage 500 may transmit, to the display apparatus 200, the playing information and image data generated in each display apparatus 200 by the server 100.

In operation S800, the display apparatus 200 displays the image data in accordance with the received playing information. Playing information may include at least one from among information which relates to a type of image data, information which relates to a playing time, and/or information which relates to a playing period. For example, in case of playing information, the image data may include an image A, an image B, and an image C. The image A may be an image which illustrates scenery of the sea for which a playing is scheduled to start at 10 a.m. and to end at 12 noon, the image B may be an image of a manufacturer to advertise a display apparatus which is scheduled to start at 12 noon and to end at 4 p.m., and the image C may be an image which illustrates selected scenes and which is scheduled to start at 4 p.m. and to end at 9 p.m. The images A, B, and C may include information which indicates an intention that the images be played from June to September. In particular, playing information may include an organization table which includes information regarding a playing time of each image. In particular, an organization table includes information which indicates which image is to be played at what time.

The server 100 may communicate with a display apparatus which is positioned at each point, register the display apparatus as a representative display apparatus, and transmit, to the registered display apparatus, image data. In this case, the registered display apparatus may receive the image data, and transmit, to another display apparatus which is also positioned at the point at which the registered display apparatus is positioned, the received playing information and the received image data.

The server 100 may register a plurality of display apparatuses which are positioned at each point simultaneously or not simultaneously, and may transmit, to the plurality of display apparatuses, playing information and image data.

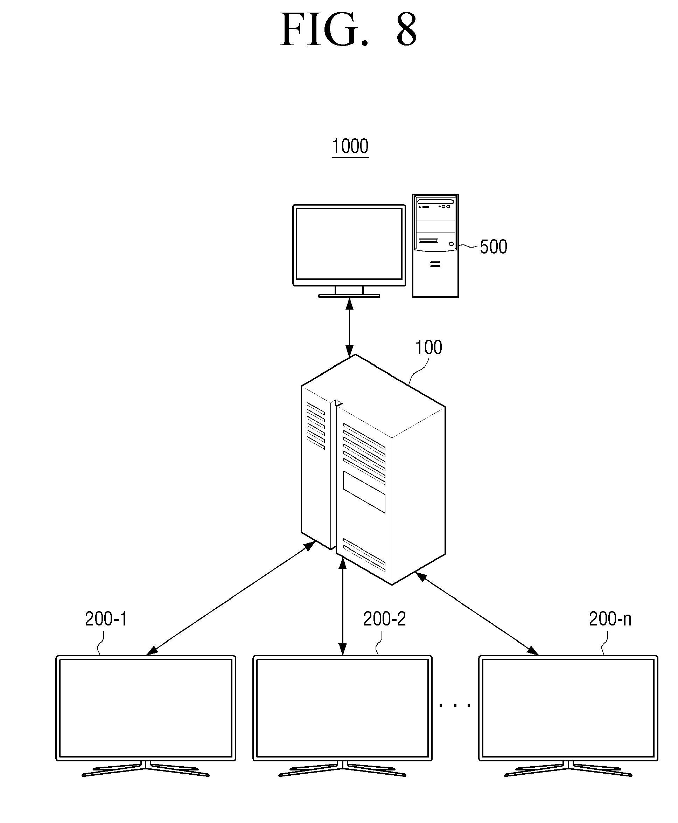

Further, as illustrated in FIG. 7, when there is a server management webpage, a system for controlling an image in a plurality of display apparatuses as illustrated in FIG. 8 may include the server 100, a plurality of display apparatuses 200-1, 200-2, ... , 200-n, and a server management personal computer (PC) 500.

As described above, a plurality of display apparatuses may be situated in an electronic equipment store, but it is merely exemplary, and thus, various cases in which a display apparatus is situated in a preset space, such as an outer wall of a building or in a room, may be included.

In summary, a system for controlling a plurality of display apparatuses which are connected to a server, a controlling method thereof, a server, and a display apparatus are provided. The method for controlling a plurality of display apparatuses includes registering the plurality of display apparatuses by using authentication information, generating playing information and image data based on the authentication information, and transmitting, to the plurality of display apparatuses, the playing information and the image data.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims and drawings), and/or all of the steps of any method or process so disclosed, may be combined in any combination, except combinations where at least some of such features and/or steps are mutually exclusive.

Each feature disclosed in this specification (including any accompanying claims and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims and drawings), or to any novel one, or any novel combination, of the steps of any method or process so disclosed.

## Claims

1. A method for controlling, by a server, a plurality of display apparatuses, comprising:
registering the plurality of display apparatuses using authentication information;
generating playing information and image data based on the authentication information; and
transmitting, to the plurality of display apparatuses, the playing information and the image data.

2. The method as claimed in claim 1, wherein the authentication information comprises at least one of a location where the plurality of display apparatuses exist, an area, a feature and a type of the plurality of display apparatuses.

3. The method as claimed in claim 1 or claim 2, wherein the playing information comprises at least one of a type of the image data and information which relates to at least one of a playing time and a playing period.

4. The method as claimed in one of claim 1 to claim 3, wherein, in response to a playing of the image data being stopped in at least one display apparatus from among the plurality of display apparatuses, the at least one display apparatus counts a playing timing of the image data after being stopped, and
wherein, the display apparatus, in response to restarting the playing of the image data, plays the image data in accordance with the counted playing timing.

5. The method as claimed in one of claim 1 to claim 4, further comprising:
receiving an inquiry regarding a playing timing of the image data being played,
wherein when a response to the inquiry is received by one of the plurality of display apparatuses, the one of the plurality of display apparatuses plays the image data based on the received response to the inquiry.

6. The method as claimed in claim 5, wherein the receiving the inquiry comprises receiving the inquiry regarding the playing timing in a preset time interval.

7. The method as claimed in one of claim 1 to claim 6, wherein the image data includes a public relation image related to the plurality of display apparatuses.

8. The method as claimed in one of claim 1 to claim 7, wherein the plurality of display apparatuses receive the image data and play the data in accordance with a preset time and a preset order.

9. An image control system of a plurality of display apparatuses, comprising:
the plurality of display apparatuses configured to register the plurality of display apparatuses to a server using authentication information, receive playing information and an image data from the server, and play the image data based on the playing information; and
the server configured to generate the playing information and the image data based on the authentication information and transmit, to the plurality of display apparatuses, the playing information and the image data.

10. The system as claimed in claim 9, wherein the authentication information comprises at least one of a location where the plurality of display apparatuses exist, an area, a feature and a type of the plurality of display apparatuses.

11. The system as claimed in claim 9 or claim 10, wherein the playing information comprises at least one of the type of the image data and information which relates to at least one of a playing time and a playing period.

12. The system as claimed in one of claim 9 to claim 11, wherein at least one of the plurality of display apparatuses, in response to a playing of the image data being stopped in the at least one display apparatus from among the plurality of display apparatuses, counts a playing timing of the image data after being stopped, and
in response to a restarting the playing of the image data, the at least one display apparatus plays the image data in accordance with the counted playing timing.

13. The system as claimed in one of claim 9 to claim 12, wherein the display apparatus transmits an inquiry to the server regarding a playing timing of the image data being played, and plays the image data based on a received response to the inquiry.

14. The system as claimed in claim 13, wherein the display apparatus transmits the inquiry regarding the playing timing in a preset time interval.

15. The system as claimed in claim 9 to claim 14, wherein the image data is a public relation image related to the plurality of display apparatuses.
